# EUROPEAN PATENT SPECIFICATION

(11) **EP 4 495 414 B1**
(45) Date of publication and mention of the grant of the patent: **28.01.2026**
(21) Application number: 23187014.8
(22) Date of filing: 21.07.2023
(51) Int. Cl.: F03D 1/00, F03D 80/50

(54) **METHOD AND SYSTEM FOR MOVING A YAW DRIVE IN A WIND TURBINE**
VERFAHREN UND SYSTEM ZUM BEWEGEN EINES GIERANTRIEBS IN EINER WINDTURBINE
PROCÉDÉ ET SYSTÈME POUR DÉPLACER UN ENTRAÎNEMENT EN LACET DANS UNE ÉOLIENNE

(43) Date of publication of application: 22.01.2025
(73) Proprietor: Siemens Gamesa Renewable Energy A/S, 7330 Brande (DK)
(72) Inventor: Heaton, Andrew, Red Oak, 51566 (US)
(74) Representative: SGRE-Association

(56) References cited:
- WO-A1-2013/080392
- CN-U- 212 744 209

## Description

### FIELD OF THE INVENTION

The present invention relates to a method, a device, and a system for moving a yaw drive in a wind turbine.

### BACKGROUND

Yaw drives are used in wind turbines for controlling an essentially horizontal orientation (or yawing) of a nacelle of a wind turbine in order to enable the rotor of the wind turbine to face into a wind direction to maximize energy yield.

Yaw drives that are used in wind turbines are heavy and large.

For mounting or removing a yaw drive in a wind turbine, the yaw drive has to be moved, at least in part, through an opening in the wind turbine. Such a movement is carried out using a crane and multiple chains.

Document CN 212 744 209 U discloses a yaw driver of a wind generating set comprising a set main control system module, a variable-frequency driver, a cabin power supply and a yaw motor M. The lower side of the yaw motor M is provided with a mounting part, the peripheral side of the mounting part is fixedly connected with a supporting block, and the top of the supporting block is fixedly connected with an accommodating cylinder, and the accommodating cylinder is provided with a lifter. The bottom end of the lifting component is fixedly connected with a universal wheel through a rotating component.

Against this background, it is a problem to be solved by the invention disclosed herein, to provide for possibility for fast, easy and reliable movement of a yaw drive in a wind turbine.

### SUMMARY

According to an aspect, the problem is solved by providing a moving device according to claim 1, a system for moving a yaw drive according to claim 7, a wind turbine according to claim 11, and a method for moving a yaw drive in a wind turbine according to claim 12.

In particular, the yaw drive may comprise a drive section having for example an electric motor and possibly a gearbox, both covered by a yaw drive housing. Hence, the plurality of moving devices are preferably mountable to the yaw drive housing. At a bottom portion (bottom face area) of the yaw drive a so-called yaw gear is provided, which can be rotated by the motor/gearbox. In a mounted position of the yaw drive, the drive section of the yaw drive is usually mounted to a bedframe or mainframe of a nacelle of a wind turbine such that the yaw gear engages a yaw ring of the wind turbine. Usually the yaw ring is firmly mounted to the tower or a nonrotating portion of the wind turbine, which also supports (directly or indirectly) the nacelle of the wind turbine.

The method disclosed herein comprises fixing a plurality of moving devices to the yaw drive, in particular to the yaw drive housing, wherein each moving device comprises a connection element by which the moving device is fixable to the yaw drive or to the yaw drive housing, an elongated moving element that is in connection with the connection element, and an end element.

An end element can be an end plate configured for ducting forces from the moving device into the wind turbine, in particular into a bedframe or mainframe of the wind turbine. Each connection element comprises a guide configured to block a movement of the connection element outside of a predefined path relative to the elongated moving element, placing the end elements of the plurality of moving devices on the wind turbine and moving the connection elements along the elongated moving elements of each moving device together with the yaw drive relative to the wind turbine or relative to the bedframe or mainframe of the wind turbine.

In the context of the present patent application, the term "fixing" means establishing a connection, in particular a fixed link such as screw and/or bolt connection.

In the context of the present patent application, the term "twisting" means to turn round, in particular to screw in the moving elements inside the connection elements.

The method disclosed herein is based on the principle that a yaw drive to be moved is connected with, i.e. fixed to a plurality of moving devices. These moving devices stand on the wind turbine, in particular around an opening through which the yaw drive is to be moved.

Thus, the moving devices form a support structure that can support the yaw drive on the bead frame or main frame of the wind turbine. This bracing of the yaw drive against the wind turbine is achieved, in particular, without any direct contact between the yaw drive and the wind turbine but indirectly via contact to the moving device which form an interface between the yaw drive and the wind turbine.

Since, according to the method disclosed herein, the end elements of the plurality of moving devices are placed on the wind turbine, the moving devices move together with the wind turbine and the yaw drive, which is fixed to the moving devices. In other words, a relative movement between the wind turbine and the yaw drive is prevented by the present invention.

By moving the connection elements of the moving devices together with the yaw drive relative to the wind turbine along the elongated moving elements, the yaw drive can be moved up or down in the wind turbine.

Since each connection element comprises a guide configured to block a movement of the connection element outside of a predefined path relative to the elongated moving element, movement of the yaw drive outside a predefined trajectory, in particular a contact between the yaw drive and the wind turbine, is prevented.

According to an embodiment, by fixing the plurality of moving devices to the yaw drive, each elongated moving element is adjusted relative to its corresponding end element such that all connection elements are kept within a given tolerance to a reference plane, in particular kept at the same level.

For adjustment of an elongated moving element relative to the wind turbine and/or relative to the yaw drive, the end element of a moving device is movable with respect to the moving element of the moving device. Thus, the end element may be kept standing on the ground of the wind turbine while the moving element is moved. Alternatively, the moving elements may be moved towards the ground while the connection elements are already fixed to the yaw drive until the end elements make contact to the ground of the wind turbine such that the end elements level out automatically and are placed in parallel to the ground, independent from an inclination angle of the moving elements to the ground.

According to another embodiment, each elongated moving element is moved separately, in particular in an alternating pattern, until a given maximum force is applied to the elongated moving element such that the yaw drive is moved on a trajectory defined by an inclination of the elongated moving elements to the yaw drive.

By moving each moving element separately, a particular moving element is moved before another moving elements is moved such that the yaw drive is moved step by step on a predefined trajectory. Thus, the yaw drive is secured by the connection elements of the moving devices whose moving elements are not moved such that moving the yaw drive out of the trajectory is prevented.

Moving of a moving element by be induced by using a ratchet wench or an automatic screwdriver, for example.

According to another embodiment, all elongated moving elements are moved simultaneously such that the yaw drive is moved exclusively in one single direction or in one single dimension.

By moving all moving elements simultaneously, the yaw drive is moved in a continuous movement and, therefore, very fast.

For simultaneous movement of the moving elements, a plurality of ratchet wrenches and/or a plurality of automatic screw drivers may be used, for example. Alternatively, or additionally, an interface may be used that connects a turning tool such as a ratchet wench or an automatic screw driver, to all moving devices simultaneously.

According to an embodiment, moving the connection elements along the elongated moving elements comprises twisting the connection elements and/or activating at least one actor attached to the connection elements.

In order to move the yaw drive, the moving elements of each moving device may be twisted or moved by an actor such as an electric motor and/or a hydraulic cylinder and/or a pneumatic cylinder such that each connection element travels along a particular moving element, in particular along a thread of a moving element in a threaded screw connection.

By twisting each moving element separately, a particular moving element is turned before another moving element/s is/are turned such that the yaw drive is moved step by step on a predefined trajectory. Thus, the yaw drive is secured by the connection elements of the moving devices whose moving elements are not turned such that moving the yaw drive out of the trajectory is prevented.

Twisting of a moving element by be induced by using a ratchet wench or an automatic screwdriver, for example.

According to another embodiment, all elongated moving elements are twisted simultaneously such that the yaw drive is moved exclusively in one single direction or in one single dimension.

By twisting all moving elements simultaneously, the yaw drive is moved in a continuous movement and, therefore, very fast.

For simultaneous movement of the moving elements, a plurality of ratchet wrenches and/or a plurality of automatic screw drivers may be used, for example. Alternatively, or additionally, an interface may be used that connects a turning tool such as a ratchet wench or an automatic screw driver, to all moving devices simultaneously.

According to a second aspect, the present invention relates to a moving device for moving a yaw drive within a wind turbine. The moving device comprises a connection element by which the moving device is fixable to the yaw drive, an elongated moving element that is in moving connection with the connection element, and an end element, wherein the connection element comprises a guide configured to block a movement of the connection element outside of a predefined path relative to the elongated moving element, and wherein the elongated moving element is connected to the end element and movable relative to the end element in two dimensions.

The moving device disclosed herein is in particular useable for carrying out the method disclosed herein.

The moving disclosed herein is based on the principle that a connection element of the moving device is fixable, i.e. attachable to a yaw drive. Thus, by moving the connection element relative to the moving element, i.e. along the moving element, the yaw drive is moved together with the connection element relative to the moving element. For establishing the connection between the connection element and the moving element, a screw connection may be used that urges the connection element into a movement along the moving element. Thus, the moving element servers as an actor for moving the connection element together with the yaw drive.

Further, the elongated moving element is connected to the end element and movable relative to the end element in two dimensions. Thus, the end element may be brought parallel to a ground level and the moving element may be brought into a stable or varying inclination angle to the end element. A relative moving of the moving element with respect to the end element may be used to arrange the end element at a specific position or to arrange the moving element with respect to other moving elements in order to form a specific geometry of multiple moving elements for defining a predetermined trajectory for moving the yaw drive.

The connection element comprises a flat element having a plurality of openings for receiving the elongated moving element and a number of connectors for connection with the yaw drive.

The connection element can be connected to the yaw drive by using screws or bolts. The connection element can be connected to the yaw drive by using screws or bolts that are already part of the yaw drive such as housing screws of the yaw drive, for example.

Additionally, the connection element may be connected to the yaw drive by a form fit connection. Thus, the connection element may be formed according to a shape of the yaw drive, thereby maximizing the contact surface between the connection element and the yaw drive.

According to an embodiment, the guide has an opening that overlaps with the opening for receiving the elongated moving element.

The guide may be formed as a flat element such as a plate, that also comprises an opening for a connection with the yaw drive or formed additionally to such a plate. In particular, the guide is configured to receive the moving element and to urge the moving element into a predetermined inclination band, i.e. a range of inclination angles with respect to the flat element. Thus, movement of the moving element with respect to the guide is only tolerated within the predetermined inclination band and blocked in case the moving elements moves too wide.

According to an embodiment, the connection element is in a screw connection with the elongated moving element or the connection element is a lifting element comprising an actor.

An actor for moving the connection along the moving element may comprise an electric motor and/or a hydraulic cylinder and/or a pneumatic cylinder.

According to an embodiment, the guide is fixed in a given angle to the flat element.

By fixing the guide in a given angle to the flat element, the tolerated predetermined inclination band is defined.

According to an embodiment, the elongated moving element is a threaded rod.

According to another embodiment, the elongated moving element comprises an end piece having a diameter that is larger than a boring in the end element and the end piece is surrounded by the end element such that the end element is movable relative to the elongated moving element.

By using an end piece having a diameter that is larger than a boring in the end element, the end piece is secured under the end element against horizontal movement. Thus, the end piece may be moved within the end element but cannot move out of the end element.

According to another embodiment, the end piece has at least partially a round shape.

A round shaped end piece results in a form fit connection independent from the relative position between the end element and the moving element.

According to another embodiment, the elongated moving element has a length between 30 cm and 200 cm, preferably between 50 cm and 100 cm, more preferably between 60 cm and 80 cm, and a diameter between 10 mm and 50 mm, preferably between 15 mm and 35 mm, more preferably between 20 mm and 25 mm.

For example, the moving elements may have a height that is at least half of the height of a yaw drive to be moved.

In particular, the moving elements may have a height that enables a lifting height for lifting a yaw drive in a way that ensures that the yaw drive of the drive yaw drive is completely out of an area of the yaw ring for receiving the yaw drive in a wind turbine.

According to another embodiment, the guide has an internal screw thread and/or the flat element has an internal screw thread.

According to a third aspect, the present invention relates to a system for moving a yaw drive in a wind turbine. The system comprises a plurality of embodiments of the moving device disclosed herein.

According to an embodiment, the system comprises a fixation element configured to secure the end elements of each of the moving devices in a position relative to each other.

A fixation element such as a plate or 3D-shaped connector, can be used to arrange the moving devices, in particular their moving elements and/or end elements relative to each other and/or relative to a reference point such as an opening through which the yaw drive needs to be moved.

The system disclosed herein is very compact. In particular, the system comprises at least three moving devices being mounted to a yaw drive. The ratio of a maximum diameter of the system to a diameter of a yaw drive to be moved may be smaller than 2, in particular smaller than 1.5, more particular smaller than 1.3, or 1.2. Thus, the system may be placed and used in a wind turbine easily, i.e. without any risk for an operator of the system.

Further, the system disclosed herein is configured for lifting the yaw drive in a lifting direction that is parallel to an axis of rotation of a yaw actor for moving the yaw drive in a wind turbine.

The connection elements may be connected to a yaw drive at any position on an outer perimeter of the yaw drive. In particular, the connection elements may be connected to screws or bolts on a cover of the yaw drive.

According to a fourth aspect, the present invention relates to using an embodiment of the system disclosed herein for moving a yaw drive in a wind turbine.

According to a fifth aspect, the present invention relates to a wind turbine. The wind turbine disclosed herein comprises a yaw drive and at least one embodiment of the moving device disclosed herein or at least one system comprising a yaw drive and at least one, preferably three moving devices.

According to a fourth aspect, the present invention relates to a procedure or method for using an embodiment of the system disclosed herein for moving a yaw drive in a wind turbine.

Additionally and/or alternatively, a further aspect is disclosed, and/or in particular as an embodiment of one of the precedingly described aspects and/or embodiments, namely, a method for moving a yaw drive in a wind turbine, in particular an offshore wind turbine, further in particular a floating offshore wind turbine, and/or for feeding electrical and/or chemical energy to an electricity and/or chemical grid, the method comprising the following steps:
executing steps of an embodiment or of a combination of embodiments of a method as disclosed supra, and/or operating an embodiment of a device as disclosed supra,
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

It is to be understood that the features mentioned above, for example twisting the elongated moving elements of each moving device such that the connection elements are moved along the moving elements together with the yaw drive relative to the wind turbine along the elongated moving elements and the connection element comprising a guide configured to block a movement of the connection element outside of a predefined path relative to the elongated moving element, and those yet to be explained below can be used not only in the respective combinations indicated, but also in other combinations, without leaving the scope of the present invention which is defined in the claims. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
- Fig. 1: shows an embodiment of the method for moving a yaw drive in a wind turbine according the invention disclosed herein,
- Fig. 2: shows a system for moving a yaw drive in a wind turbine comprising a plurality of moving devices, according to an embodiment of the invention disclosed herein, and
- Fig. 3: shows a detailed perspective of a moving device according to Fig. 2.

### DETAILED DESCRIPTION

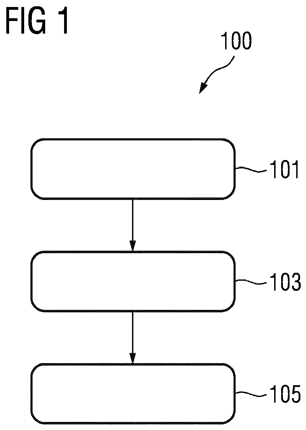

In Fig. 1, a method 100 for moving a yaw drive in a wind turbine is shown.

The method 100 comprises a fixation step 101, in which a plurality of moving devices are fixated to the yaw drive 201, wherein each moving device comprises a connection element by which the moving device is fixable to the yaw drive, an elongated moving element that is in a screw connection with the connection element, and an end element, and wherein each connection element comprises a guide configured to block a movement of the connection element outside of a predefined path relative to the elongated moving element.

Further, the method 100 comprises a placing step 103, in which the end elements of the plurality of moving devices are placed on the wind turbine, and a twisting step 105, in which the elongated moving elements of each moving device are twisted such that the connection elements are moved along the moving elements together with the yaw drive relative to the wind turbine along the elongated moving elements.

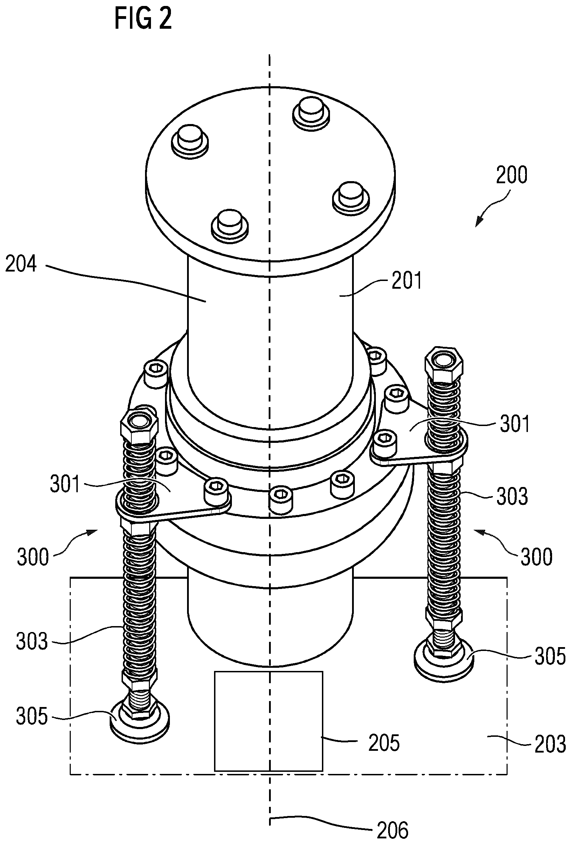

In Fig. 2, a system 200 for moving a yaw drive 201 in a wind turbine 203 is shown. The system 200 comprises a plurality of moving devices 300.

Each moving device 300 comprises a connection element 301 by which the moving device is fixed to the yaw drive 201, an elongated moving element 303 that is in connection, in particular in a screw connection with the connection element 301, and an end element 305.

Each connection 301 element comprises a guide 307 configured to block a movement of the connection element 301 outside of a predefined path relative to the elongated moving element 303 or vice versa.

Each elongated moving element 303 is connected to an end element 305 and movable relative to the end element 305 in two dimensions.

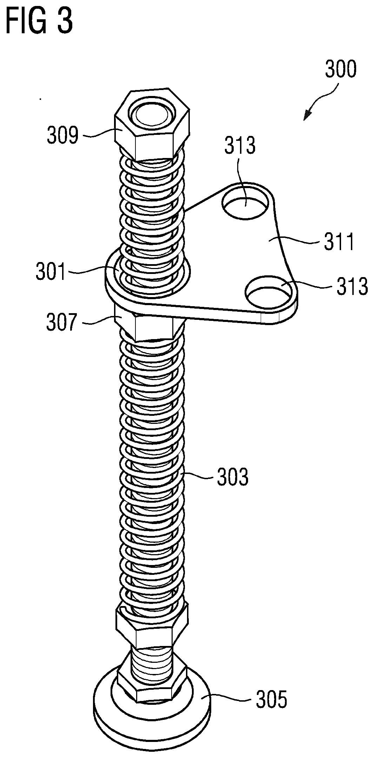

In Fig. 3, a moving device 300 is shown in detail. The moving device 300 comprises a connection element 301 configured to be fixed to a yaw drive, an elongated moving element 303 in form of a threaded rod that is in a screw connection with the connection element 301, and an end element 305.

By turning a nut 309 fixed, in particular welded, to the moving element 303, the moving element can be twisted, i.e. turned such that the connection element 301 moves along the moving element 303.

The connection element 301 comprises a flat element 311, a guide 307 and openings 313 for receiving screws, for example, to connect with the yaw drive 201.

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein.

It has to be noted that embodiments of the invention have been described with reference to different subject matters. In particular, some embodiments have been described with reference to apparatus type claims such as the connection element comprising a guide configured to block a movement of the connection element outside of a predefined path relative to the elongated moving element, whereas other embodiments have been described with reference to method type claims such as twisting the elongated moving elements of each moving device such that the connection elements are moved along the moving elements together with the yaw drive relative to the wind turbine along the elongated moving elements. However, a person skilled in the art will gather from the above description that, unless otherwise notified, in addition to any combination of features belonging to one type of subject matter, also any combination between features relating to different subject matters, in particular between features of the apparatus type claims and features of the method type claims such as a combination of the connection element comprising a guide configured to block a movement of the connection element outside of a predefined path relative to the elongated moving element while twisting the elongated moving elements of each moving device such that the connection elements are moved along the moving elements together with the yaw drive relative to the wind turbine along the elongated moving elements is considered as to be disclosed within this application.

### Reference sign list

- 100: method
- 101: fixation step
- 103: placing step
- 105: twisting step

- 200: system
- 201: yaw drive
- 203: wind turbine
- 204: yaw drive housing
- 205: yaw gear
- 206: longitudinal axis

- 300: moving device
- 301: connection element
- 303: elongated moving element
- 305: end element
- 307: guide
- 309: nut
- 311: flat element
- 313: openings

## Claims

1. A moving device (300) for moving a yaw drive (201) within a wind turbine (203), the moving device (300) comprising:
a connection element (301) by which the moving device (300) is fixable to the yaw drive (201);
an elongated moving element (303) that is in connection with the connection element (301); and
an end element (305);
wherein the connection element (301) comprises a guide (307) configured to block a movement of the connection element (301) outside of a predefined path relative to the elongated moving element (303),
wherein the connection element (301) is configured such that the connection element (301) is connectable to the yaw drive by using screws or bolts that are already part of the yaw drive,
wherein the elongated moving element (303) is connected to the end element (305) and movable relative to the end element (305) in two directions or along one single axis, and
wherein the end element (305) is configured for being placed on the wind turbine (203), on a bed frame, or on a mainframe of the wind turbine (203).

2. The moving device (300) according to claim 1, wherein the connection element (301) comprises
at least one flat element (311) having at least one opening (313), in particular a plurality of openings (313), for receiving the elongated moving element (303), and at least one connector, in particular two connectors, for connecting the flat element (313) with the yaw drive (201).

3. The moving device (300) according to claim 1 or 2, wherein the guide (307) has an opening that overlaps with an opening for receiving the elongated moving element (303).

4. The moving device (300) according to any of the preceding claims,
wherein the connection element (301) is in a screw connection with the elongated moving element (303), and/or
wherein the connection element (301) is a lifting element comprising an actor.

5. The moving device (300) according to any of the preceding claims, wherein the elongated moving element (303) comprises an end element (305) having a diameter that is larger than a bore in the end element (305) and the end piece is surrounded by the end element (305) such that the end element (305) is movable or rotatable relative to the elongated moving element (305).

6. The moving device (300) according to any of the preceding claims, wherein the elongated moving element (303) has a length between 30 cm and 200 cm, preferably between 50 cm and 100 cm, more preferably between 60 cm and 80 cm, and a diameter between 10 mm and 50 mm, preferably between 15 mm and 35 mm, more preferably between 20 mm and 25 mm.

7. A system (200) for moving a yaw drive (201) in a wind turbine (203),
wherein the system (200) comprises at least three moving devices (300), according to any of the preceding claims.

8. The system (200) according to claim 7, further comprising a fixation element configured to secure the end elements (305) of each of the moving devices (300) in a position relative to each other.

9. The system (200) according to claim 7 or 8, further comprising a yaw drive (201), wherein the at least three moving devices (300) are mounted to the yaw drive (201).

10. The system (200) according to one of the preceding claims 7 to 9, wherein a ratio of a maximum diameter of the system (200) to a diameter of the yaw drive (201) is less than 2, in particular less than 1.5, preferably less than 1.3, or more preferably less than 1.2.

11. A wind turbine for generating electrical energy, wherein the wind turbine comprises a nacelle having a generator, a rotor having at least one rotor blade, the rotor being configured for rotating a generator of the nacelle, and at least one system according to one of the claims 7 to 10.

12. A method (100) for moving a yaw drive (201) in a wind turbine (203), the method (100) comprising:
fixing (101) at least three moving devices (300) according to one of the claims 1 to 6 to the yaw drive (201);
placing (103) the end elements (305) of the at least three moving devices (300) on the wind turbine (203), on a bed frame, or on a mainframe of the wind turbine, (203); and
moving (105) the connection elements (301) along the elongated moving elements (303) of each moving device (300) together with the yaw drive (201), relative to the wind turbine (203).

13. The method (100) according to claim 12, wherein by fixing the at least three moving devices (300) to the yaw drive (201), each elongated moving element (303) is adjusted relative to its corresponding end element (305) such that all connection elements (303) are kept within a given tolerance to a reference plane, in particular kept at the same level.

14. The method (100) according to claim 12 or 13,
wherein each elongated moving element (303) is moved separately, in particular in an alternating pattern, until a given maximum force is applied to the elongated moving element (303) such that the yaw drive (201) is moved, in particular on a trajectory defined by an inclination of the elongated moving elements (303) to the yaw drive (201), or
wherein all elongated moving elements (303) are moved simultaneously such that the yaw drive (201) is moved only in one dimension or direction.

15. The method (100) according to any of the preceding claims 12 to 14 , wherein moving (105) the connection elements (301) along the elongated moving elements (303) comprises twisting the connection elements (301) and/or activating at least one actor attached to the connection elements.

## Patentansprüche

1. Bewegungsvorrichtung (300) zum Bewegen eines Gierantriebs (201) innerhalb einer Windenergieanlage (203), wobei die Bewegungsvorrichtung (300) Folgendes umfasst:
ein Verbindungselement (301), durch das die Bewegungsvorrichtung (300) an dem Gierantrieb (201) fixierbar ist;
ein längliches Bewegungselement (303), das mit dem Verbindungselement (301) in Verbindung steht; und
ein Endelement (305);
wobei das Verbindungselement (301) eine Führung (307) umfasst, die dazu ausgelegt ist, eine Bewegung des Verbindungselements (301) außerhalb eines vordefinierten Pfades relativ zu dem länglichen Bewegungselement (303) zu blockieren,
wobei das Verbindungselement (301) so ausgelegt ist, dass das Verbindungselement (301) mit dem Gierantrieb unter Verwendung von Schrauben oder Bolzen, die bereits Teil des Gierantriebs sind, verbindbar ist,
wobei das längliche Bewegungselement (303) mit dem Endelement (305) verbunden und relativ zu dem Endelement (305) in zwei Richtungen oder entlang einer einzigen Achse beweglich ist, und
wobei das Endelement (305) dazu ausgelegt ist, an der Windenergieanlage (203), an einem Bettrahmen oder an einem Hauptrahmen der Windenergieanlage (203) platziert zu werden.

2. Bewegungsvorrichtung (300) nach Anspruch 1, wobei das Verbindungselement (301) Folgendes umfasst
mindestens ein flaches Element (311), das mindestens eine Öffnung (313), insbesondere mehrere Öffnungen (313), zum Aufnehmen des länglichen Bewegungselements (303) aufweist, und mindestens einen Verbinder, insbesondere zwei Verbinder, zum Verbinden des flachen Elements (313) mit dem Gierantrieb (201).

3. Bewegungsvorrichtung (300) nach Anspruch 1 oder 2, wobei die Führung (307) eine Öffnung aufweist, die sich mit einer Öffnung zum Aufnehmen des länglichen Bewegungselements (303) überlappt.

4. Bewegungsvorrichtung (300) nach einem der vorhergehenden Ansprüche,
wobei das Verbindungselement (301) in einer Schraubverbindung mit dem länglichen Bewegungselement (303) steht, und/oder wobei das Verbindungselement (301) ein Hubelement ist, das einen Aktuator umfasst.

5. Bewegungsvorrichtung (300) nach einem der vorhergehenden Ansprüche, wobei das längliche Bewegungselement (303) ein Endelement (305) umfasst, das einen Durchmesser aufweist, der größer als eine Bohrung in dem Endelement (305) ist, und wobei das Endstück von dem Endelement (305) umgeben ist, so dass das Endelement (305) relativ zu dem länglichen Bewegungselement (305) beweglich oder drehbar ist.

6. Bewegungsvorrichtung (300) nach einem der vorhergehenden Ansprüche, wobei das längliche Bewegungselement (303) eine Länge zwischen 30 cm und 200 cm, vorzugsweise zwischen 50 cm und 100 cm, stärker bevorzugt zwischen 60 cm und 80 cm, und einen Durchmesser zwischen 10 mm und 50 mm, vorzugsweise zwischen 15 mm und 35 mm, stärker bevorzugt zwischen 20 mm und 25 mm aufweist.

7. System (200) zum Bewegen eines Gierantriebs (201) in einer Windenergieanlage (203),
wobei das System (200) mindestens drei Bewegungsvorrichtungen (300) nach einem der vorhergehenden Ansprüche umfasst.

8. System (200) nach Anspruch 7, ferner umfassend ein Fixierungselement, das dazu ausgelegt ist, die Endelemente (305) jeder der Bewegungsvorrichtungen (300) in einer Position relativ zueinander zu sichern.

9. System (200) nach Anspruch 7 oder 8, ferner umfassend einen Gierantrieb (201), wobei die mindestens drei Bewegungsvorrichtungen (300) an dem Gierantrieb (201) montiert sind.

10. System (200) nach einem der vorhergehenden Ansprüche 7 bis 9, wobei ein Verhältnis eines maximalen Durchmessers des Systems (200) zu einem Durchmesser des Gierantriebs (201) kleiner als 2, insbesondere kleiner als 1,5, vorzugsweise kleiner als 1,3 oder stärker bevorzugt kleiner als 1,2 ist.

11. Windenergieanlage zum Erzeugen elektrischer Energie, wobei die Windenergieanlage eine Gondel mit einem Generator, einen Rotor mit mindestens einem Rotorblatt, wobei der Rotor zum Drehen eines Generators der Gondel ausgelegt ist, und mindestens ein System nach einem der Ansprüche 7 bis 10 umfasst.

12. Verfahren (100) zum Bewegen eines Gierantriebs (201) in einer Windenergieanlage (203), wobei das Verfahren (100) Folgendes umfasst:
Fixieren (101) von mindestens drei Bewegungsvorrichtungen (300) nach einem der Ansprüche 1 bis 6 an dem Gierantrieb (201);
Platzieren (103) der Endelemente (305) der mindestens drei Bewegungsvorrichtungen (300) an der Windenergieanlage (203), an einem Bettrahmen oder an einem Hauptrahmen der Windenergieanlage (203); und
Bewegen (105) der Verbindungselemente (301) entlang der länglichen Bewegungselemente (303) jeder Bewegungsvorrichtung (300) zusammen mit dem Gierantrieb (201) relativ zu der Windenergieanlage (203).

13. Verfahren (100) nach Anspruch 12, wobei durch Fixieren der mindestens drei Bewegungsvorrichtungen (300) an dem Gierantrieb (201) jedes längliche Bewegungselement (303) relativ zu seinem entsprechenden Endelement (305) so eingestellt wird, dass alle Verbindungselemente (303) innerhalb einer vorgegebenen Toleranz zu einer Referenzebene gehalten werden, insbesondere auf derselben Höhe gehalten werden.

14. Verfahren (100) nach Anspruch 12 oder 13,
wobei jedes längliche Bewegungselement (303) separat, insbesondere in einem alternierenden Muster, bewegt wird, bis eine vorgegebene maximale Kraft auf das längliche Bewegungselement (303) ausgeübt wird, so dass der Gierantrieb (201) insbesondere auf einer Trajektorie bewegt wird, die durch eine Neigung der länglichen Bewegungselemente (303) zu dem Gierantrieb (201) definiert ist, oder
wobei alle länglichen Bewegungselemente (303) gleichzeitig bewegt werden, so dass der Gierantrieb (201) nur in einer Dimension oder Richtung bewegt wird.

15. Verfahren (100) nach einem der vorhergehenden Ansprüche 12 bis 14, wobei das Bewegen (105) der Verbindungselemente (301) entlang der länglichen Bewegungselemente (303) Verdrehen der Verbindungselemente (301) und/oder Aktivieren mindestens eines Aktuators, der an den Verbindungselementen angebracht ist, umfasst.

## Revendications

1. Dispositif de déplacement (300) pour déplacer un entraînement de lacet (201) à l'intérieur d'une éolienne (203), le dispositif de déplacement (300) comprenant :
un élément de raccordement (301) par lequel le dispositif de déplacement (300) peut être fixé à l'entraînement de lacet (201) ;
un élément de déplacement allongé (303) qui se trouve en raccordement avec l'élément de raccordement (301) ; et
un élément d'extrémité (305) ;
dans lequel l'élément de raccordement (301) comprend un guide (307) configuré pour bloquer un mouvement de l'élément de raccordement (301) à l'extérieur d'un trajet prédéfini par rapport à l'élément de déplacement allongé (303),
dans lequel l'élément de raccordement (301) est configuré de sorte que l'élément de raccordement (301) peut être raccordé à l'entraînement de lacet en utilisant des vis ou des boulons qui font déjà partie de l'entraînement de lacet,
dans lequel l'élément de déplacement allongé (303) est raccordé à l'élément d'extrémité (305) et mobile par rapport à l'élément d'extrémité (305) dans deux directions ou le long d'un axe unique, et
dans lequel l'élément d'extrémité (305) est configuré pour être placé sur l'éolienne (203), sur un châssis porteur de la nacelle, ou sur un châssis principal de l'éolienne (203).

2. Dispositif de déplacement (300) selon la revendication 1, dans lequel l'élément de raccordement (301) comprend
au moins un élément plat (311) ayant au moins une ouverture (313), en particulier une pluralité d'ouvertures (313), pour recevoir l'élément de déplacement allongé (303), et
au moins un raccord, en particulier deux raccords, pour raccorder l'élément plat (313) à l'entraînement de lacet (201).

3. Dispositif de déplacement (300) selon la revendication 1 ou 2, dans lequel le guide (307) présente une ouverture qui chevauche une ouverture de réception de l'élément de déplacement allongé (303).

4. Dispositif de déplacement (300) selon l'une quelconque des revendications précédentes,
dans lequel l'élément de raccordement (301) est un raccordement à vis avec l'élément de déplacement allongé (303), et/ou
dans lequel l'élément de raccordement (301) est un élément de levage comprenant un acteur.

5. Dispositif de déplacement (300) selon l'une quelconque des revendications précédentes, dans lequel l'élément de déplacement allongé (303) comprend un élément d'extrémité (305) ayant un diamètre qui est plus grand qu'un trou dans l'élément d'extrémité (305) et la pièce d'extrémité est entourée de l'élément d'extrémité (305) de sorte que l'élément d'extrémité (305) est mobile ou peut tourner par rapport à l'élément de déplacement allongé (305).

6. Dispositif de déplacement (300) selon l'une quelconque des revendications précédentes, dans lequel l'élément de déplacement allongé (303) présente une longueur comprise entre 30 cm et 200 cm, préférablement entre 50 cm et 100 cm, plus préférablement entre 60 cm et 80 cm, et un diamètre compris entre 10 mm et 50 mm, préférablement entre 15 mm et 35 mm, plus préférablement entre 20 mm et 25 mm.

7. Système (200) de déplacement d'un entraînement de lacet (201) dans une éolienne (203),
dans lequel le système (200) comprend au moins trois dispositifs de déplacement (300), selon l'une quelconque des revendications précédentes.

8. Système (200) selon la revendication 7, comprenant en outre un élément de fixation configuré pour fixer solidement les éléments d'extrémité (305) de chacun des dispositifs de déplacement (300) en position l'un par rapport à l'autre.

9. Système (200) selon la revendication 7 ou 8, comprenant en outre un entraînement de lacet (201), dans lequel les au moins trois dispositifs de déplacement (300) sont montés à l'entraînement de lacet (201).

10. Système (200) selon l'une quelconque des revendications précédentes 7 à 9, dans lequel un ratio d'un diamètre maximal du système (200) à un diamètre de l'entraînement de lacet (201) est inférieur à 2, en particulier inférieur à 1,5, préférablement inférieur à 1,3, ou plus préférablement inférieur à 1,2.

11. Éolienne de génération d'énergie électrique, dans laquelle l'éolienne comprend une nacelle ayant un générateur, un rotor ayant au moins une pale de rotor, le rotor étant configuré pour faire tourner un générateur de la nacelle, et au moins un système selon l'une des revendications 7 à 10.

12. Procédé (100) de déplacement d'un entraînement de lacet (201) dans une éolienne (203), le procédé (100) comprenant les étapes consistant à :
fixer (101) au moins trois dispositifs de déplacement (300) selon l'une des revendications 1 à 6 à l'entraînement de lacet (201) ;
mettre en place (103) les éléments d'extrémité (305) des au moins trois dispositifs de déplacement (300) sur l'éolienne (203), sur un châssis porteur de la nacelle, ou sur un châssis principal de l'éolienne (203) ; et
déplacer (105) les éléments de raccordement (301) le long des éléments de déplacement allongés (303) de chaque dispositif de déplacement (300) conjointement à l'entraînement de lacet (201), par rapport à l'éolienne (203).

13. Procédé (100) selon la revendication 12, dans lequel en fixant les au moins trois dispositifs de déplacement (300) à l'entraînement de lacet (201), chaque élément de déplacement allongé (303) est ajusté par rapport à son élément d'extrémité (305) correspondant, de sorte que tous les éléments de raccordement (303) sont maintenus à l'intérieur d'une tolérance donnée d'un plan de référence, en particulier maintenus au même niveau.

14. Procédé (100) selon la revendication 12 ou 13,
dans lequel chaque élément de déplacement allongé (303) est déplacé séparément, en particulier selon un motif d'alternance, jusqu'à ce qu'une force maximale donnée soit appliquée à l'élément de déplacement allongé (303) de sorte que l'entraînement de lacet (201) est déplacé, en particulier sur une trajectoire définie par une inclinaison des éléments de déplacement allongés (303) vis-à-vis de l'entraînement de lacet (201), ou
dans lequel tous les éléments de déplacement allongés (303) sont simultanément déplacés de sorte que l'entraînement de lacet (201) est déplacé uniquement dans une dimension ou direction.

15. Procédé (100) selon l'une quelconque des revendications précédentes 12 à 14, dans lequel le déplacement (105) des éléments de raccordement (301) le long des éléments de déplacement allongés (303) comprend l'étape consistant à torsader les éléments de raccordement (301) et/ou à activer au moins un acteur fixé aux éléments de raccordement.
